# EUROPÄISCHE PATENTSCHRIFT

(11) **EP 1 306 277 B1**
(45) Veröffentlichungstag und Bekanntmachung des Hinweises auf die Patenterteilung: **09.07.2008**
(21) Anmeldenummer: 02019686.1
(22) Anmeldetag: 04.09.2002
(51) Int. Cl.: B60T 7/10, B60T 13/74

(54) **Elektrisch angesteuerte Parkbremse**
Electrically controlled parking brake
Frein de stationnement contrôlé électriquement

(30) Priorität: 26.10.2001 DE 10153038
(43) Veröffentlichungstag der Anmeldung: 02.05.2003
(73) Patentinhaber: AUDI AG, 85045 Ingolstadt (DE)
(72) Erfinder: Balnus, Christian, 80796 München (DE)
(74) Vertreter: Thielmann, Frank

(56) Entgegenhaltungen:
- EP-A- 0 976 634
- DE-A- 19 836 687
- DE-A- 19 838 886
- DE-A- 19 849 799

## Beschreibung

Die Erfindung betrifft eine Steuerung für eine elektrisch angesteuerte Parkbremse, sowie eine elektrisch angesteuerte Parkbremse mit einer derartigen Steuerung.

Aus DE 41 29 502 A1 sind verschiedene Parkbremsen sowie Bedienungselemente und Steuerungen dafür bekannt. Im Zusammenhang mit der Beschreibung der US 4 629 043 A wird eine Parkbremse beschrieben, deren Steuerung eine manuelle Betätigung der Feststellbremse nur bei eingeschalteter Bordnetzspannung erlaubt. Bei ausgeschalteter Bordnetzspannung wird die Parkbremse automatisch durch die Steuerung festgestellt. Dies ist in Übereinstimmung mit der ECE-R-13-Regulation (5.2.1.26.4), die vorschlägt, daß es möglich bleiben soll, die Parkbremse festzustellen, wenn der Zünd- oder Startschalter, der die elektrische Energieversorgung des Bremssystems steuert, ausgeschaltet worden und / oder der Schlüssel entfernt worden ist. Dagegen soll eine Freigabe in diesem Zustand gemäß der genannten Regulation nicht möglich sein. Zur Bedienung weist die Parkbremse gemäß US 4 629 043 A als Bedienungselement betätigbare Schalttasten auf.

Eine in der DE 41 29 502 A1 beschriebene Steuerung, die ebenfalls die ECE-R-13-Regulation erfüllt, weist eine Sicherheitseinrichtung auf, die eine Betätigung der Parkbremse durch die Bedienungselemente unterdrückt, wenn die Bordnetzspannung durch den Zündschalter eingeschaltet ist. Das heißt, daß eine Betätigung der Parkbremse bei eingeschalteter Bordnetzspannung verhindert wird, nach einem Abschalten der Bordnetzspannung jedoch die Parkbremse durch den Bediener frei willkürlich betätigbar ist. Als Bedienungselemente sind ein oder zwei Schalter vorgesehen, welche gemäß einer in der genannten Schrift als vorteilhaft beschriebenen Ausführungsform über eine Steuerung mit einem Betriebsbremsensensor verbunden sind. Ein Lösen der Parkbremse ist nur dann möglich, wenn gleichzeitig die Betriebsbremse betätigt ist, was über einen Bremslichtschalter erfasst werden kann.

Während ein automatisches Feststellen der Parkbremse gemäß US 4 629 043 A bei ausgeschalteter Bordnetzspannung den bereits in der genannten Schrift beschriebenen Nachteil hat, nach einem Stillsetzen des Antriebes des Kraftfahrzeuges ein Rollen nicht mehr zu ermöglichen, hat eine Parkbremse gemäß DE 41 29 502 A1, die nur bei ausgeschalteter Bordnetzspannung betätigbar ist, den Nachteil, bei bestimmten Fahrsituationen, beispielsweise bei sich stauendem Verkehr auf gebirgiger Strecke, den Einsatz der Parkbremse nicht zu erlauben, was für den Fahrzeugbenutzer nicht nur unkomfortabel sondern auch gefährlich sein kann, wenn beispielsweise bei eingeschalteter Zündung die Betriebsbremsen versagen sollten, während das Fahrzeug rollt oder zu rollen droht.

Eine weitere Parkbremse für Kraftwagen ist aus der EP 0 976 634 A2 bekannt, wobei diese Parkbremse radweise angeordnete Aktuatoren aufweist. Die elektrische Beschaltung ist derart ausgestaltet, dass bei einem abgezogenen Zündschlüssel die Feststellbremse noch betätigt, jedoch nicht mehr gelöst werden kann.

Der Erfindung liegt die Aufgabe zugrunde, die Sicherheit elektrisch angesteuerter Parkbremsen bei hohem Betätigungskomfort zu erhöhen.

Gemäß der Erfindung ist vorgesehen, dass bei einer Steuerung für eine elektrisch angesteuerte Parkbremse, ein Eingang für ein Betriebszustandssignal (BLS Info) des Betriebsbremsensensors vorgesehen ist, der dazu dient, an den Ausgang ein Ausgangssignal zum Lösen der Parkbremse zu senden, wenn der Betriebsbremsensensor eine Betätigung der Betriebsbremse zwar nicht nachweist, gleichzeitig aber das Betriebszustandssignal (BLS Info) des Betriebsbremsensensors negativ ist. Durch die erfindungsgemäße Steuerung wird gewährleistet, daß auch bei einem Ausfall des Betriebsbremsensensors ein Lösen der Parkbremse möglich ist.

Gemäß einer bevorzugten Ausführungsform der Erfindung wird ein Ausgangssignal zum Feststellen der Parkbremse bei Vorliegen eines "Feststellen"-Betätigungssignals des Bedienungselementes sowohl bei einem Vorliegen eines positiven Zündungsbetriebszustandssignals als auch bei dessen Fehlen erzeugt. Auf diese Weise wird gewährleistet, dass ein Kraftfahrzeug in jedem Falle, insbesondere bei einem Defekt, gebremst und ggf. sicher abgestellt werden kann.

Die genannten Vorteile zeigen sich insbesondere bei einer elektrisch angesteuerten Parkbremse, die eine vorstehend beschriebene Steuerung aufweist, insbesondere wenn mindestens eines der Stellelemente einen mechanischen, pneumatischen oder hydraulischen Kraftübertragungsweg aufweist.

Weitere vorteilhafte Ausgestaltungen und Weiterbildungen der Erfindung ergeben sich aus den Unteransprüchen sowie aus der Beschreibung im Zusammenhang mit den Zeichnungen.

Es zeigen:
- Fig. 1.: eine schematische Darstellung einer erfindungsgemäßen elektrisch angesteuerten Parkbremse mit einer erfindungsgemäßen Steuerung,
- Fig. 2.: ein Flussdiagramm zur Erläuterung der erfindungsgemäßen Steuerung, und
- Fig. 3.: ein Bedienungselement aus Fig. 1 in vereinfachter vergrößerter Darstellung.

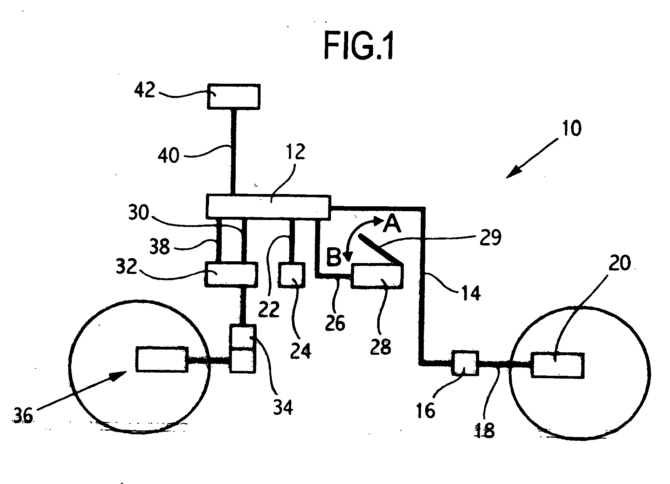

Die in Fig. 1 schematisch dargestellte elektrisch angesteuerte Parkbremse 10 weist eine Steuerung 12 auf, welche über einen Ausgang 14 ein oder mehrere Stellelemente 16 ansteuert, welche über einen mechanischen Übertragungsweg 18, insbesondere einen Bowdenzug Bremsorgane 20 einrückt oder löst. Die Erfindung läßt sich auch mit einer Anordnung ausführen, bei der die Stellelemente direkt auf an den Hinterrädern angeordnete Bremskolben der Betriebsbremsen wirken. Durch das Einrücken oder Lösen der Bremsorgane 20 wird die Parkbremse festgestellt bzw. gelöst.

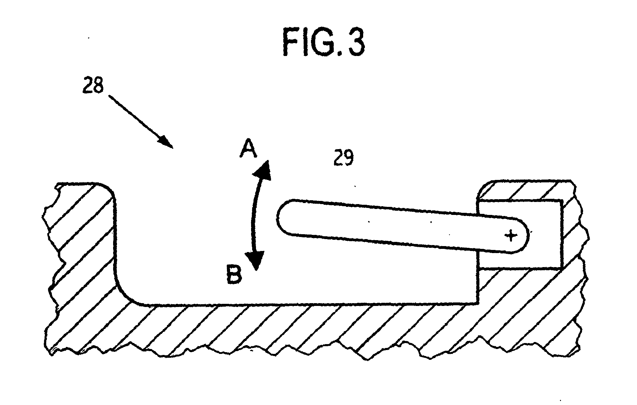

Die Steuerung 12 ist über einen ersten Eingang 22 mit einem Zündschalter 24 verbunden, wobei die Steuerung 12 über den ersten Eingang 22 ein Zündungsbetriebszustandssignal einliest, welches nachweist, ob die Zündung ein- oder ausgeschaltet ist. Über einen zweiten Eingang 26 ist die Steuerung 12 mit einem Bedienungselement 28 (Fig. 3) verbunden, welches nach Art von elektrischen Fensterheberschaltern, wie sie bei Fahrzeugen der Marke Audi seit Jahren im Einsatz sind, sowohl durch Zug (A) als auch durch Druck (B) betätigbar ist. Das Bedienungselement 28 weist einen Betätigungshebel 29 auf.

Über einen dritten Eingang 30 ist die Steuerung 12 über eine Motorsteuerung oder ein ESP 32 mit einem Betriebsbremsensensor 34 verbunden, welcher nachweist, ob eine Betriebsbremse 36, mit welcher das Kraftfahrzeug im normalen Fahrbetrieb abgebremst wird, betätigt ist oder nicht. Als Betriebsbremsensensor 34 sind sowohl ein von dem Bremslichtschalter (BLS) abgeleitetes Signal, ein am Bremspedal detektiertes Signal oder ein aus dem Bremsdruck der Betriebsbremse abgeleitetes Signal verwendbar.

Die Steuerung 12 weist ferner einen vierten Eingang 38 auf, über welchen ein Betriebszustandssignal (BLS Info) des Betriebsbremsensensors 34 eingelesen wird, wobei das Betriebszustandssignal (BLS Info) in dem gezeigten Ausführungsbeispiel ein Signal ist, welches nachweist, ob die Motorsteuerung bzw. das ESP 32 und damit dessen CAN-Bus aktiv sind oder nicht. Für die Ausführung der Erfindung ist es ferner möglich, den Betriebsbremsensensor 34 direkt an der Steuerung 12 anzuschließen, wobei es dann lediglich erforderlich ist, für den Betriebsbremsensensor 34 abzufragen, ob ein Signal überhaupt vorhanden ist und wenn ja, ob dieses einen vorgegebenen Sollwert überschreitet.

Zur Übermittlung von Informationen an den Fahrzeugbenutzer weist die Steuerung ferner einen Informationsausgang 40 auf, welcher mit einem optischen oder akustischen Signalgeber 42, beispielsweise einer Warnlampe, einem Display oder einem Summer verbunden ist.

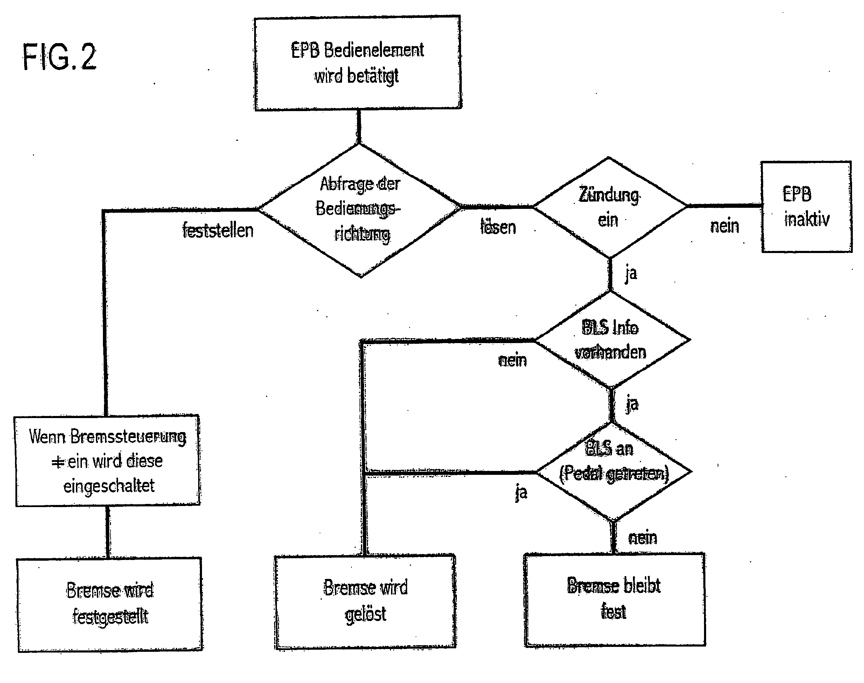

Zur Erläuterung der Steuerung 12 wird auf das Flussdiagramm in Fig. 2 verwiesen. Wird das Bedienungselement 28 betätigt, erfolgt zunächst die Abfrage, ob das Bedienungselement 28 durch Ziehen des Betätigungshebels 29 in Richtung des Pfeiles A zum Zwecke der Feststellung der Parkbremse 10 oder durch Drücken in Richtung des Pfeiles B im Sinne eines Lösens der Parkbremse 10 betätigt worden ist. Sollte der Betätigungshebel 29 des Bedienelementes 28 durch Zug im Sinne eines Feststellens betätigt worden sein, wird von der Steuerung 12 ein Ausgangssignal über den Ausgang 14 zu dem Stellelement 16 gesendet, woraufhin die Bremsorgane 20 einrücken und ihre Bremswirkung entfalten. Dieses Feststellen erfolgt unabhängig von dem Zündungsbetriebszustandssignal, wobei bei dessen Fehlen die etwaig schlafende Steuerung sowie zusätzliche Aggregate, die zum Betätigen des oder der Stellelemente 16 erforderlich sind, aufgeweckt und damit eingeschaltet werden.

Erfolgt die Betätigung des Betätigungshebels 29 des Bedienungselementes 28 durch Druck im Sinne eines Lösens der Parkbremse, wird zunächst überprüft, ob an dem ersten Eingang ein Zündungsbetriebszustandssignal eine eingeschaltete Zündung nachweist. Ist dies nicht der Fall, bleibt die elektrisch angesteuerte Parkbremse (EPB) inaktiv. Dadurch wird gewährleistet, daß bei geparktem Fahrzeug Kinder oder Tiere nicht unbeabsichtigt die Parkbremse 10 lösen können.

Ist das Zündungsbetriebszustandssignal positiv, also die Zündung eingeschaltet, wird anschließend über das Betriebszustandssignal (BLS Info) abgefragt, ob der Betriebsbremsensensor 34, im vorliegenden Falle der Bremslichtschalter (BLS) aktiv ist und z. B. via CAN-Bus ein auswertbares Signal liefert. Ist dies nicht der Fall, werden über das Stellelement 16 die Bremsorgane 20 und damit die Parkbremse 10 gelöst.

Liegt also ein Betriebszustandssignal (BLS Info) der Motorsteuerung bzw. des ESP 32, insbesondere an einem CAN-Bus nicht vor, folgert die Steuerung 12 daraus eine Störung des Betriebsbremsensensors 34 und löst über das Stellelement 16 die Parkbremse 10, wobei gleichzeitig ein Warnsignal über den Signalgeber 42 ausgegeben werden kann, welches auf die inaktive Motorsteuerung bzw. das inaktive ESP 32 hinweist.

Liegt ein positives Betriebszustandssignal (BLS Info), das von der Motorsteuerung bzw. dem ESP 32 über den vierten Eingang 38 der Steuerung 12 zugeführt werden kann, für den Betriebsbremsensensor 34 vor, wird überprüft, ob das Betriebsbremsensenorsignal vorhanden oder positiv ist. Ist dies nicht der Fall, bleibt die Parkbremse 10 festgestellt. Liegt ein positives Signal des Betriebsbremsensensors 34 vor, ist also das Bremspedal getreten, wird die Parkbremse 10 gelöst.

## Patentansprüche

1. Steuerung für eine elektrisch angesteuerte Parkbremse (10), mit mindestens einem ersten Eingang (22) zum Einlesen eines eine eingeschaltete Zündung nachweisenden Zündungsbetriebszustandssignals, einem zweiten Eingang (26) zum Einlesen des Betätigungszustandes eines Bedienungselementes (28), einem dritten Eingang (30) zum Einlesen eines den Betriebszustand einer Betriebsbremse (36) nachweisenden Betriebsbremsensensors (34) und einem Ausgang (14) zu mindestens einem Stellelement (16), mit welchem die Bremsorgane (20) der Parkbremse (10) betätigt werden, **gekennzeichnet durch** einen Eingang (38) für ein Betriebszustandssignal (BLS Info) des Betriebsbremsensensors (34), wobei an den Ausgang (14) ein Ausgangssignal zum Lösen der Parkbremse (10) gesendet wird, wenn der Betriebsbremsensensor (34) eine Betätigung der Betriebsbremse (36) zwar nicht nachweist aber gleichzeitig das Betriebszustandssignal (BLS Info) des Betriebsbremsensensors (34) negativ ist.

2. Steuerung nach Anspruch 1, **dadurch gekennzeichnet, dass** ein Ausgangssignal zum Feststellen der Parkbremse (10) bei Vorliegen eines "Feststellen"- Betätigungssignals des Bedienungselementes (28) sowohl bei Vorliegen eines positiven Zündungsbetriebszustandssignals als auch bei dessen Fehlen erzeugt wird.

3. Elektrisch angesteuerte Parkbremse, **gekennzeichnet durch** eine Steuerung (12) nach Anspruch 1 oder 2.

4. Elektrisch angesteuerte Parkbremse nach Anspruch 3, **dadurch gekennzeichnet, daß** mindestens ein Stellelement (16) der Parkbremse (10) einen mechanischen, pneumatischen oder hydraulischen Kraftübertragungsweg (18) aufweist.

## Claims

1. Control system for an electrically actuated parking brake (10), comprising at least a first input (22) for the input of an ignition operating status signal indicating that the ignition is switched on, a second input (26) for the input of the state of actuation of a control element (28), a third input (30) for the input of a service brake sensor (34) indicating the operating state of a service brake (36) and an output (14) to at least one actuator (16) by means of which the brake members (20) of the parking brake (10) are actuated, **characterised by** an input (38) for an operating status signal (BLS Info) from the service brake sensor (34), an output signal for releasing the parking brake (10) being sent to the output (14) when the service brake sensor (34) does not indicate actuation of the service brake (36), but the operating status signal (BLS Info) from the service brake sensor (34) is negative.

2. Control system according to claim 1, **characterised in that** an output signal for applying the parking brake (10) is produced in the presence of an "apply" actuating signal from the control element (28) both in the presence of a positive ignition operating status signal and in the absence thereof.

3. Electrically actuated parking brake, **characterised by** a control system (12) according to claim 1 or claim 2.

4. Electrically actuated parking brake according to claim 3, **characterised in that** at least one actuator (16) of the parking brake (10) has a mechanical, pneumatic or hydraulic power train (18).

## Revendications

1. Commande pour un frein de stationnement à activation électrique (10), comportant au moins une première entrée (22) destinée à la lecture d'un signal d'état de fonctionnement d'allumage décelant un allumage intervenu, une seconde entrée (26) destinée à la lecture de l'état d'actionnement d'un élément de commande (28), une troisième entrée (30) destinée à la lecture d'un capteur de frein de service (34) décelant l'état de fonctionnement d'un frein de service (36) et une sortie (14) vers au moins un élément de réglage (16), avec laquelle les organes de freinage (20) du frein de stationnement (10) sont actionnés, **caractérisée par** une entrée (38) pour un signal d'état de fonctionnement (BLS Info) du capteur de frein de service (34), dans laquelle un signal de sortie destiné au desserrement du frein de stationnement (10) est envoyé à la sortie (14) lorsque le capteur de frein de service (34) ne décèle certes pas un actionnement du frein de service (36) mais, en même temps, le signal d'état de fonctionnement (BLS Info) du capteur de frein de service (34) est négatif.

2. Commande selon la revendication 1, **caractérisé en ce qu'**un signal de sortie destiné au blocage du frein de stationnement (10) est généré lors de la présence d'un signal d'actionnement « blocage » de l'élément de commande (28), non seulement en cas de présence d'un signal d'état de fonctionnement d'allumage positif mais également en cas de son défaut.

3. Frein de stationnement à activation électrique, **caractérisé par** une commande (12) selon la revendication 1 ou 2.

4. Frein de stationnement à activation électrique selon la revendication 3, **caractérisé en ce qu'**au moins un élément de réglage (16) du frein de stationnement (10) présente une voie de transmission de force mécanique, pneumatique ou hydraulique (18).
